# EUROPÄISCHE PATENTSCHRIFT

(11) **EP 1 633 968 B1**
(45) Veröffentlichungstag und Bekanntmachung des Hinweises auf die Patenterteilung: **16.04.2008**
(21) Anmeldenummer: 04725876.9
(22) Anmeldetag: 06.04.2004
(51) Int. Cl.: F02M 25/08, F16K 31/06

(54) **TANKENTLÜFTUNGSVENTIL**
TANK VENT VALVE
SOUPAPE DE PURGE DE RESERVOIR

(30) Priorität: 05.06.2003 DE 10325379
(43) Veröffentlichungstag der Anmeldung: 15.03.2006
(73) Patentinhaber: ROBERT BOSCH GMBH, 70442 Stuttgart (DE)
(72) Erfinder: MEISIEK, Achim, 73635 Rudersberg (DE); SCHULZ, Wolfgang, 74321 Bietigheim-Bissingen (DE)
(86) Internationale Anmeldenummer: PCT/DE2004/000711
(87) Internationale Veröffentlichungsnummer: WO 2004/109089

(56) Entgegenhaltungen:
- DE-A- 10 112 661
- DE-A- 19 901 090
- FR-A- 2 761 447
- US-A- 5 232 196
- US-A- 5 579 741
- US-A- 5 775 670
- US-A1- 2002 088 496
- US-A1- 2003 056 771

## Beschreibung

### Stand der Technik

Die Erfindung geht aus von einem Tankentlüftungsventil nach der Gattung des Hauptanspruchs.
Es ist schon ein Tankentlüftungsventil aus der DE 199 01 090 A1 bekannt, das einen Ventilsitz und einen zum Ventilsitz beweglich angeordneten Ventilkörper mit einem Dichtungselement und einem Dämpfungselement aufweist. Das Dichtungselement ist auf einer dem Ventilsitz zugewandten Seite des Ventilkörpers und das Dämpfungselement auf einer dem Ventilsitz abgewandten Seite des Ventilkörpers angeordnet. Das Dichtungselement und das Dämpfungselement sind einteilig mittels Spritzguß an dem Ventilkörper angespritzt und aus einem einzigen Elastomer bestehend aus einer Mischung von Fluorsilikon und Silikon hergestellt. Bei der Auswahl des Elastomers muß ein Kompromiß zwischen guten Dichteigenschaften und guten Dämpfungseigenschaften eingegangen werden.

### Vorteile der Erfindung

Das erfindungsgemäße Tankentlüftungsventil mit den kennzeichnenden Merkmalen des Hauptanspruchs hat demgegenüber den Vorteil, daß auf einfache Art und Weise eine Verbesserung der Funktion des Tankentlüftungsventils erzielt wird, indem das Dichtungselement aus einem ersten Elastomer und das Dämpfungselement aus einem zweiten Elastomer hergestellt ist. Auf diese Weise sind sehr gute Dichteigenschaften am Dichtungselement und sehr gute Dämpfungseigenschaften am Dämpfungselement erzielbar.

Erfindungsgemäß bestehen das erste Elastomer und das zweite Elastomer aus einem Fluorsilikon und einem Silikon, da dies eine besonders geeignete Werkstoffmischung ist, wobei das zweite Elastomer mehr Fluorsilikon aufweist als das erste Elastomer, da das zweite Elastomer dadurch weniger kraftstoffempfindlich ist.

Durch die in den Unteransprüchen aufgeführten Maßnahmen sind vorteilhafte Weiterbildungen und Verbesserungen des im Hauptanspruch angegebenen Tankentlüftungsventils möglich.

In einer vorteilhaften Ausgestaltung beträgt ein Fluorsilikon-Silikon-Verhältnis des ersten Elastomers eins zu eins. Mit diesem Mischungsverhältnis sind sehr gute Eigenschaften hinsichtlich geringem Verschleiß erreichbar.

In einer weiteren vorteilhaften Ausgestaltung beträgt das Fluorsilikon-Silikon-Verhältnis des zweiten Elastomers neun zu eins. Mit diesem Mischungsverhältnis sind sehr gute Eigenschaften hinsichtlich geringem Aufquellen bei intensivem Kraftstoffkontakt erreichbar.

Desweiteren vorteilhaft ist, wenn das erste Elastomer und das zweite Elastomer unterschiedliche Shorehärten aufweisen, da auf diese Weise die Dichtungseigenschaften des Dichtelements und die Dämpfungseigenschaften des Dämpfungselements optimiert werden können.

Darüber hinaus vorteilhaft ist, das Dichtungselement und das Membranelement mittels Spritzguß an den Ventilkörper anzuspritzen, da dies eine besonders günstige Herstellung des Ventilkörpers ermöglicht.

Auch vorteilhaft ist, wenn auf der dem Ventilsitz abgewandten Seite des metallischen Grundkörpers ein Membranelement angeordnet ist, das den Ventilkörper beweglich zwischen dem Ventilsitz und einem Anschlag lagert, da auf diese Weise eine kostengünstige und zuverlässige Lagerung des Ventilkörpers erzielbar ist.

### Zeichnung

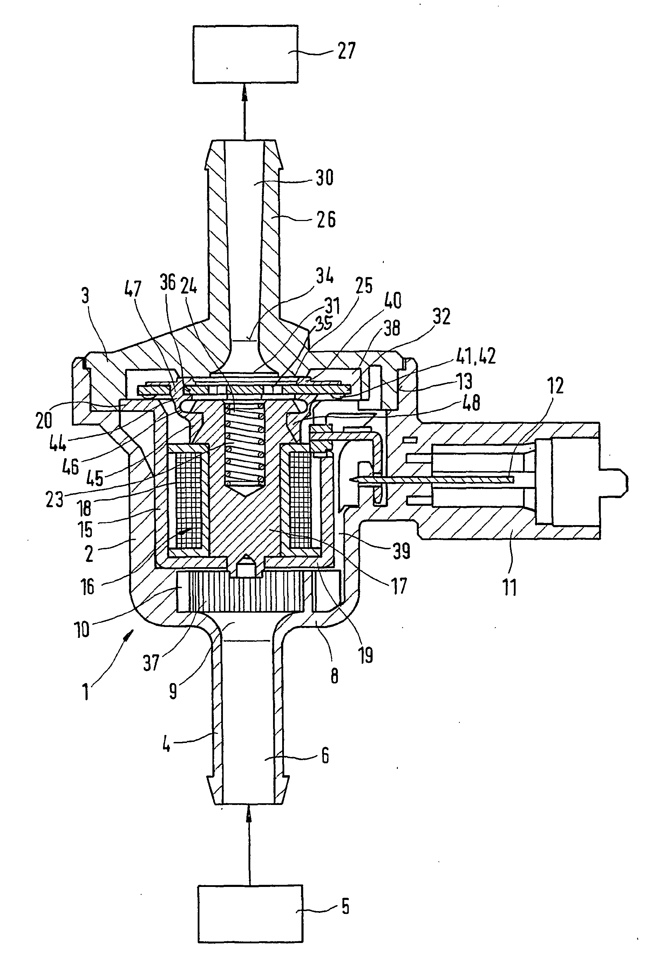

Ein Ausführungsbeispiel der Erfindung ist in der Zeichnung vereinfacht dargestellt und in der nachfolgenden Beschreibung näher erläutert.

### Beschreibung des Ausführungsbeispiels

Die Zeichnung zeigt ein erfindungsgemäßes Tankentlüftungsventil zum dosierten Zumischen von aus einem Kraftstofftank einer Brennkraftmaschine verflüchtigtem Kraftstoff in die Brennkraftmaschine.

Ein Tankentlüftungsventil ist beispielsweise aus der DE 101 12 661 A1 bekannt, wobei deren Inhalt ausdrücklich Teil der Offenbarung dieser Anmeldung sein soll.

Das Tankentlüftungsventil wird eingangsseitig beispielsweise an einen Aktivkohlefilter und ausgangsseitig zumindest mittelbar an ein Ansaugrohr oder einen Zylinder einer Brennkraftmaschine angeschlossen. Durch Öffnen des Tankentlüftungsventils kann unter Ausnutzung eines Unterdrucks in dem Ansaugrohr der Brennkraftmaschine Frischluft aus der Atmosphäre über den Aktivkohlefilter angesaugt werden, wobei der Aktivkohlefilter aus einem Kraftstofftank verflüchtigten Kraftstoff an die Frischluft abgibt und der verflüchtigte Kraftstoff zusammen mit der Frischluft in das Ansaugrohr gelangt und damit der Brennkraftmaschine zugeführt wird. Ein Steuergerät steuert über eine Öffnungszeit des Tankentlüftungsventils die Menge des zugemischten Kraftstoffes. Dabei kann das Tankentlüftungsventil durch abwechselndes Öffnen und Schließen taktend angesteuert sein.

Das Tankentlüftungsventil besteht beispielsweise aus einem zweiteiligen Ventilgehäuse 1 mit einem ersten Gehäuseteil 2, das beispielsweise topfförmig ausgebildet ist, und mit einem zweiten Gehäuseteil 3, das beispielsweise deckelförmig ausgebildet ist. Das erste Gehäuseteil 2 hat beispielsweise einen Eingangsanschluß 4 zum zumindest mittelbaren Anschließen an einen mit beispielsweise Aktivkohle gefüllten Speicher 5 für den verflüchtigten Kraftstoff. Der Eingangsanschluß 4 weist einen Eingangskanal 6 auf, der im Bereich eines Gehäusebodens 8 des topfförmigen ersten Gehäuseteils 2 über eine Öffnung 9 in einen von dem ersten Gehäuseteil 2 und dem zweiten Gehäuseteil 3 eingegrenzten Gehäuseinnenraum 10 des Ventilgehäuses 1 mündet. Der Eingangskanal 6 ist an einem der Öffnung 9 abgewandten Ende zumindest mittelbar mit dem Speicher 5 verbunden. Der erste Gehäuseteil 2 weist beispielsweise an seinem Umfang einen einteilig mit dem ersten Gehäuseteil 2 verbundenen Stecker 11 auf, der elektrische Anschlusselemente 12 zum Anschluss an äußere Steckkontakte aufweist. Das zweite Gehäuseteil 3 ist beispielsweise in einer Gehäuseaussparung 13 des ersten Gehäuseteils 2 zentriert angeordnet.

In dem Gehäuseinnenraum 10 des topfförmigen ersten Gehäuseteils 2 ist beispielsweise ein topfförmiger Magnettopf 15 angeordnet, in dem ein Aktor, beispielsweise ein Elektromagnet 16, vorgesehen ist. Der topfförmige Magnettopf 15 hat einen Topfboden 19, der in dem ersten Gehäuseteil 2 dem Gehäuseboden 8 zugewandt ist, und auf der dem Topfboden 19 gegenüberliegenden Stirnseite einen nach radial außen zeigenden Topfkragen 20.

Der Elektromagnet 16 weist eine ringförmig um einen Magnetkern 17 angeordnete Erregerspule 18 auf. Der Magnetkern 17 überragt die Erregerspule 18 in seiner Längserstreckung bis zu dem Topfkragen 20. Der Magnetkern 17 weist auf der dem Topfkragen 20 zugewandten Stirnseite beispielsweise eine Aussparung 23 auf, in der ein Federelement, beispielsweise eine schraubenförmige Druckfeder 24, angeordnet ist.

Auf der dem Gehäuseboden 8 des ersten Gehäuseteils 2 zugewandten Seite des zweiten Gehäuseteils 3 ist ein Ventilsitz 25 ausgebildet.

An dem zweiten Gehäuseteil 3 ist ein Ausgangsanschluß 26 zum zumindest mittelbaren Anschließen an ein Ansaugrohr 27 einer Brennkraftmaschine vorgesehen. Der Ausgangsanschluß 26 hat einen Ausgangskanal 30, der über eine am Ventilsitz 25 angeordnete Ventilöffnung 31 in den Gehäuseinnenraum 10 führt, und ist an einem der Ventilöffnung 31 abgewandten Ende zumindest mittelbar mit dem Ansaugrohr 27 verbunden. Der Ventilsitz 25 ist beispielsweise ringförmig um die Ventilöffnung 31 herum vorgesehen.

Der Ventilsitz 25 des zweiten Gehäuseteils 3 ist beabstandet zum Topfkragen 20 des Magnettopfes 15 angeordnet. Zwischen dem Ventilsitz 25 und dem Topfkragen 20 ist ein Ventilkörper 32 in axialer Richtung beweglich vorgesehen. Der Topfkragen 20 dient als Anschlag zur Begrenzung der Hubbewegung des Ventilkörpers 32. Der Ventilkörper 32 überdeckt die Ventilöffnung 31 beim Anliegen am Ventilsitz 25 und schließt dabei die Ventilöffnung 31 dicht ab. Hebt der Ventilkörper 32 vom Ventilsitz 25 ab, ist die Ventilöffnung 31 geöffnet.

Das Ventilgehäuse 1 hat beispielsweise eine Ventilachse. Der Eingangsanschluß 4 mit dem Eingangskanal 6, der Ausgangsanschluß 26 mit dem Ausgangskanal 30, der erste Gehäuseteil 2, der zweite Gehäuseteil 3, der Magnettopf 15 mit dem Magnetkern 17 und der Erregerspule 18 und der Ventilkörper 32 sind beispielsweise konzentrisch zu der Ventilachse angeordnet.

Der Ausgangskanal 30 ist beispielsweise als Düse ausgebildet, verengt sich von der Ventilöffnung 31 aus in Strömungsrichtung bis zu einem engsten Kanalquerschnitt 34 und erweitert sich anschließend bis zu dem der Ventilöffnung 31 abgewandten Ende.

Der Gehäuseboden 8 und der Topfboden 19 des Magnettopfes 15 sind beabstandet zueinander, so daß in dem Gehäuseinnenraum 10 ein hohler Ventileingangsraum 37 gebildet ist. Der Ventileingangsraum 37 kann einen Filter zur Abscheidung von Schmutzpartikel aufweisen. Der Gehäuseinnenraum 10 zwischen dem Ventilsitz 25 und dem Topfkragen 20 wird als Ventilraum 38 bezeichnet. Der Ventileingangsraum 37 und der Ventilraum 38 sind über zumindest einen Seitenkanal 39 miteinander verbunden. Der Seitenkanal 39 ist zumindest abschnittsweise beispielsweise durch einen Spalt zwischen dem topfförmigen Magnettopf 15 und dem ersten Gehäuseteil 2 gebildet.

Der Ventilkörper 32 besteht aus einem metallischen Grundkörper 36, der beispielsweise scheibenförmig ausgebildet und aus einem magnetisierbaren Metall hergestellt ist. An dem metallischen Grundkörper 36 ist im Bereich der Ventilöffnung 31 beispielsweise zumindest eine als Durchgangsöffnung ausgebildete und in Richtung Magnetkern 17 verlaufende Druckausgleichsöffnung 35 vorgesehen. Dadurch wirkt der über den Ausgangskanal 30 wirkende Druck des Ansaugrohrs 27 sowohl auf eine dem Ventilsitz 25 zugewandte Teilfläche als auch auf eine dem Ventilsitz abgewandte Teilfläche des metallischen Grundkörpers 36, so daß der Elektromagnet 16 beim Öffnen des Tankentlüftungsventils nur die Kraft der Druckfeder 24 und nicht zusätzlich eine beispielsweise in Richtung Ventilsitz 25 wirkende Ansaugkraft zu überwinden hat. An dem metallischen Grundkörper 36 des Ventilkörpers 32 ist im Bereich des Ventilsitzes 25 auf der dem Ventilsitz 25 zugewandten Seite ein elastisches Dichtungselement 40 vorgesehen. Das Dichtungselement 40 dichtet den Ventilsitz 25 bei geschlossenem Tankentlüftungsventil ringförmig um die Ventilöffnung 31 herum ab, so daß kein Gas aus dem Speicher 5 über die Ventilöffnung 31 des Tankentlüftungsventils in das Ansaugrohr 27 strömen kann.

Der Grundkörper 36 des Ventilkörpers 32 hat im Bereich des Topfkragens 20 auf der dem Ventilsitz 25 abgewandten Seite ein elastisches Dämpfungselement 41. Das Dämpfungselement 41 dämpft das Aufprallen des Grundkörpers 36 auf den Topfkragen 20 beim Öffnen des Tankentlüftungsventils, so daß keine störenden Geräusche entstehen. Das Dämpfungselement 41 weist beispielsweise noppenförmige, in Richtung Topfkragen 20 ragende Erhebungen 42 auf, die den Topfkragen 20 bei Annäherung des Grundkörpers 32 an den Topfkragen 20 zeitlich vor dem Grundkörper 32 berühren.

Am Grundkörper 36 des Ventilkörpers 32 ist im Bereich des Magnetkerns 17 auf der dem Ventilsitz 25 abgewandten Seite ein elastisches Membranelement 44 angeordnet, das vom Grundkörper 36 ausgehend in Richtung des Topfbodens 19 verläuft, zumindest abschnittsweise den Magnetkern 17 ringförmig umgreift und mit einer wulstförmigen Verdickung 48 in einer weiteren Aussparung 45 des Magnetkerns 17 angeordnet ist. Die weitere Aussparung 45 ist beispielsweise als ringförmig umlaufende Nut in dem Magnetkern 17 vorgesehen. Der Grundkörper 36 des Ventilkörpers 32 weist Durchgangsöffnungen 47 auf, über die das Dichtungselement 40 mit dem Membranelement 44 beispielsweise einteilig verbunden ist.

Das Membranelement 44 weist zwischen der Verdickung 48 und der dem Ventilsitz 25 abgewandten Seite des Grundkörpers 36 beispielsweise eine Membranfalte 46 auf, die eine Bewegung des Ventilkörpers 32 zwischen Ventilsitz 25 und Topfkragen 20 ermöglicht. Der Ventilkörper 32 ist mittels des Membranelements 44 beweglich am Magnetkern 17 gelagert.

Das Dichtungselement 40, das Dämpfungselement 41 und das Membranelement 44 sind beispielsweise am Grundkörper 36 des Ventilkörpers 32 angeordnet und beispielsweise einteilig miteinander verbunden.

Das Tankentlüftungsventil ist stromlos geschlossen, da die Druckfeder 24 den Ventilkörper 32 mit dem Dichtungselement 40 gegen den Ventilsitz 25 drückt. Wird die Erregerspule 18 des Elektromagneten 16 bestromt, entsteht im Magnettopf 15 ein Magnetfeld, das den Ventilkörper 32 vom Ventilsitz 25 abhebt und in Richtung Topfkragen 20 zieht. Durch diese von dem Magnetfeld bewirkte Hubbewegung ist die Ventilöffnung 31 und damit das Tankentlüftungsventil geöffnet, so daß Gas aus dem Speicher 5 über den Eingangskanal 6, den Ventileingangsraum 37, den Seitenkanal 39, den Ventilraum 38, die Ventilöffnung 31 und den Ausgangskanal 30 in Richtung Ansaugrohr 27 strömen kann. Der Hub des Ventilkörpers 32 beträgt beispielsweise 0,6 Millimeter. Das Dosieren des über das Tankentlüftungsventil strömenden Gas-Volumenstroms geschieht beispielsweise durch taktendes Öffnen und Schließen des Tankentlüftungsventils.

Elastomere neigen allgemein bei intensivem oder langem Kraftstoffkontakt zum Vergrößern ihres Volumens.

Damit die Hubbewegung des Ventilkörpers 32 und damit die Funktionsfähigkeit des Tankentlüftungsventils auch unter extremen Bedingungen nicht beeinträchtigt wird, ist für das Dämpfungselement 41 ein Werkstoff mit guten Eigenschaften hinsichtlich des Aufquellens vorzusehen.

Erfindungsgemäß ist das Dichtungselement 40 aus einem ersten Elastomer und das Dämpfungselement 41 aus einem zweiten Elastomer hergestellt, wobei das erste Elastomer ausreichende Eigenschaften und das zweite Elastomer sehr gute Eigenschaften hinsichtlich einer geringen Aufquellneigung besitzt. Das Membranelement 44 ist beispielsweise aus dem ersten Elastomer hergestellt.

Das erste Elastomer und/oder das zweite Elastomer besteht beispielsweise aus einer Mischung von einem Fluorsilikon und einem Silikon, wobei das zweite Elastomer des Dämpfungselements 41 einen höheren Anteil an Fluorsilikon aufweist als das erste Elastomer des Dichtungselements 40. Das erste Elastomer und/oder das zweite Elastomer kann aber auch aus Viton oder einem anderen geeigneten Elastomer bestehen. Beispielsweise kann das erste Elastomer aus einer Mischung von einem Fluorsilikon und einem Silikon hergestellt sein und das zweite Elastomer aus Viton.

Das Verhältnis von Fluorsilikon zu Silikon ist beim ersten Elastomer beispielsweise eins zu eins. Mit dieser Ausbildung hat das Dichtungselement 40 gute Eigenschaften bezüglich Festigkeit, Knickverhalten und geringem Verschleiß. Ein geringfügiges Aufquellen des Dichtungselements 40 bei sehr hoher Kraftstoffkonzentration des durch das Tankentlüftungsventil strömenden Gases hat keinen Einfluß auf die Funktionsfähigkeit des Tankentlüftungsventils.

Das Verhältnis von Fluorsilikon zu Silikon beim zweiten Elastomer ist beispielsweise neun zu eins. Mit dieser Ausbildung weist das Dämpfungselement 41 sehr gute Eigenschaften bezüglich einem geringen Aufquellen bei hoher Kraftstoffkonzentration im Volumenstrom des Tankentlüftungsventils auf.

Das Verhältnis von Fluorsilikon zu Silikon kann aber auch kleiner oder größer sein als neun zu eins, solange das zweite Elastomer des Dämpfungselements 41 mehr Fluorsilikon aufweist als das erste Elastomer des Dichtungselements 40.

Dadurch, daß für das Dichtungselement 40 und das Dämpfungselement 41 jeweils ein Elastomer vorgesehen ist, kann das erste Elastomer zusätzlich hinsichtlich sehr guter Dichteigenschaften und das zweite Elastomer zusätzlich hinsichtlich sehr guter Dämpfungseigenschaften optimal ausgebildet werden.

Das erste Elastomer und das zweite Elastomer können beispielsweise unterschiedliche Shorehärten aufweisen, um die Dichtungseigenschaften des Dichtelements und die Dämpfungseigenschaften des Dämpfungselements weiter zu optimieren.

Das Dichtungselement 40, das Dämpfungselement 41 und das Membranelement sind beispielsweise mittels eines bekannten Zwei-Komponenten-Spritzgießverfahrens in einem Verfahrensschritt an den Grundkörper 36 angespritzt.

## Patentansprüche

1. Tankentlüftungsventil zum dosierten Zumischen von aus einem Kraftstofftank einer Brennkraftmaschine verflüchtigtem Kraftstoff in die Brennkraftmaschine, mit einem Ventilsitz (25) und einen beweglich zum Ventilsitz (25) angeordneten Ventilkörpen (32), wobei auf der dem Ventilsitz (25) zugewandten Seite des Ventilkörpers (32) ein Dichtungselement und auf dem Ventilsitz (25) abgewandten Seite des Ventilkörpers (32) ein Dämpfungselement (41) vorgesehen ist, **dadurch gekennzeichnet, dass** das Dichtungselement (40) aus einem ersten Elastomer und das Dämpfungselement (41) aus einem zweiten Elastomer mit gegenüber dem ersten Elastomer anderen Eigenschaften hergestellt ist, wobei das erste Elastomer und das zweite Elastomer aus Fluorsilikon und Silikon bestehen und das zweite Elastomer einen höheren Anteil an Fluorsilikon aufweist als das erste Elastomer.

2. Tankentlüftungsventil nach Anspruch 1, **dadurch gekennzeichnet, dass** das erste Elastomer und/oder das zweite Elastomer aus Viton oder einem anderen geeigneten Elastomer besteht.

3. Tankentlüftungsventil nach Anspruch 1, **dadurch gekennzeichnet, dass** ein Verhältnis von Fluorsilikon zu Silikon des ersten Elastomers eins zu eins beträgt.

4. Tankentlüftungsventil nach Anspruch 1, **dadurch gekennzeichnet, dass** ein Verhältnis von Fluorsilikon zu Silikon des zweiten Elastomers neun zu eins beträgt.

5. Tankentlüftungsventil nach Anspruch 1, **dadurch gekennzeichnet, dass** das erste Elastomer und das zweite Elastomer unterschiedliche Shorehärten aufweisen.

6. Tankentlüftungsventil nach Anspruch 1, **dadurch gekennzeichnet, dass** der Ventilkörper (32) einen metallischen Grundkörper (36) aufweist, an dem das Dichtungselement (40) und das Dämpfungselement (41) vorgesehen ist.

7. Tankentlüftungsventil nach Anspruch 5, **dadurch gekennzeichnet, dass** das Dichtungselement (40) und das Dämpfungselement (41) mittels Spritzguß, vorzugsweise einem 2-Komponenten Spritzgießverfahren, an den metallischen Grundkörper (36) des Ventilkörpers (32) angespritzt sind.

8. Tankentlüftungsventil nach Anspruch 5, **dadurch gekennzeichnet, dass** auf der dem Ventilsitz (25) abgewandten Seite des metallischen Grundkörpers (36) ein Membranelement (44) angeordnet ist, das den Ventilkörper (32) beweglich zwischen dem Ventilsitz (25) und einem Anschlag (20) lagert.

## Claims

1. Tank vent valve for the metered admixing of fuel which has been volatilized from a fuel tank of an internal combustion engine into the internal combustion engine, with a valve seat (25) and a valve body (32) arranged moveably with respect to the valve seat (25), wherein a sealing element is provided on that side of the valve body (32) which faces the valve seat (25) and a damping element (41) is provided on that side of the valve body (32) which faces away from the valve seat (25), **characterized in that** the sealing element (40) is produced from a first elastomer and the damping element (41) is produced from a second elastomer having different properties from the first elastomer, the first elastomer and the second elastomer being composed of fluorosilicone and silicone and the second elastomer having a higher proportion of fluorosilicone than the first elastomer.

2. Tank vent valve according to Claim 1, **characterized in that** the first elastomer and/or the second elastomer is/are composed of Viton or of another suitable elastomer.

3. Tank vent valve according to Claim 1, **characterized in that** a ratio of fluorosilicone to silicone of the first elastomer is one to one.

4. Tank vent valve according to Claim 1, **characterized in that** a ratio of fluorosilicone to silicone of the second elastomer is nine to one.

5. Tank vent valve according to Claim 1, **characterized in that** the first elastomer and the second elastomer have different Shore hardnesses.

6. Tank vent valve according to Claim 1, **characterized in that** the valve body (32) has a metallic basic body (36) on which the sealing element (40) and the damping element (41) are provided.

7. Tank vent valve according to Claim 5, **characterized in that** the sealing element (40) and the damping element (41) are moulded onto the metallic basic body (36) of the valve body (32) by means of injection moulding, preferably by means of a two-component injection-moulding process.

8. Tank vent valve according to Claim 5, **characterized in that** a membrane element (44) which mounts the valve body (32) in a moveable manner between the valve seat (25) and a stop (20) is arranged on that side of the metallic basic body (36) which faces away from the valve seat (25).

## Revendications

1. Soupape de purge de réservoir pour doser l'adjonction dans le moteur du carburant volatilise provenant d'un réservoir de carburant d'un moteur à combustion interne, comprenant un siège de soupape (25) ainsi qu'un corps de soupape (32) mobile par rapport au siège de soupape (25),
le côté du corps de soupape (32) tourné vers le siège de soupape (25) étant muni d'un élément d'étanchéité et le côté du corps de soupape (32) non tourné vers le siège de soupape (25) étant muni d'un élément d'amortissement (41),
**caractérisée en ce que**
l'élément d'étanchéité (40) est réalisé en un premier élastomère et l'élément d'amortissement (41) est réalisé en un second élastomère ayant des propriétés différentes de celles du premier élastomère,
le premier élastomère et le second élastomère étant en fluorosilicone et en silicone et le second élastomère ayant une plus forte teneur en fluorosilicone que le premier élastomère.

2. Soupape de purge de réservoir selon la revendication 1,
**caractérisée en ce que**
le premier élastomère et/ou le second élastomère sont en Viton ou en autre élastomère approprié.

3. Soupape de purge de réservoir selon la revendication 1,
**caractérisée en ce que**
le rapport de fluorosilicone par rapport au silicone du premier élastomère est de 1 à 1.

4. Soupape de purge de réservoir selon la revendication 1,
**caractérisée en ce que**
le rapport de fluorosilicone par rapport au silicone du second élastomère est de 9 à 1.

5. Soupape de purge de réservoir selon la revendication 1,
**caractérisée en ce que**
le premier élastomère et le second élastomère ont des duretés shore, différentes.

6. Soupape de purge de réservoir selon la revendication 1,
**caractérisée en ce que**
le corps de soupape (32) comporte un corps de base métallique (36) muni de l'élément d'étanchéité (40) et de l'élément amortisseur (41).

7. Soupape de purge de réservoir selon la revendication 5,
**caractérisée en ce que**
l'élément d'étanchéité (40) et l'élément d'amortissement (41) sont surmoulés par injection, de préférence selon un procédé d'injection à deux composants, sur le corps de base métallique (36) du corps de soupape (32).

8. Soupape de purge de réservoir selon la revendication 5,
**caractérisé en ce que**
sur le côté du corps de base métallique (36) non tourné vers le siège de soupape (25), il y a un élément de membrane (44) qui porte le corps de soupape (32) de manière mobile entre le siège de soupape (25) et une butée (20).
